**Europäisches Patentamt**

**European Patent Office**

**Office européen des brevets**

(19)

(11) Veröffentlichungsnummer: **0 151 297**
**B1**

(12) **EUROPÄISCHE PATENTSCHRIFT**

(51) Int. Cl.⁴: **G 21 C 19/06, G 21 F 9/34**

(45) Veröffentlichungstag der Patentschrift:
**15.11.89**

(21) Anmeldenummer: **84115809.0**

(22) Anmeldetag: **19.12.84**

(54) Lager für radioaktive Abfälle und abgebrannte Brennelemente.

(30) Priorität: **08.02.84 DE 3404329**

(43) Veröffentlichungstag der Anmeldung:
**14.08.85 Patentblatt 85/33**

(45) Bekanntmachung des Hinweises auf die Patenterteilung:
**15.11.89 Patentblatt 89/46**

(84) Benannte Vertragsstaaten:
**BE CH DE FR GB LI SE**

(56) Entgegenhaltungen:
**EP-A-0 047 875**
**DE-A-3 038 592**

**NUCLEAR TECHNOLOGY, Band 59, Nr. 1, Oktober 1982, Seiten 85-98, ANS, Danville, Illinois, US; L.M. LIBBY et al.: "Evaluation of an international perpetual, and retrievable facility for storage of vitrified radioactive waste"**
**ATOMKERNENERGIE KERNTECHNIK, Band 35, Nr. 2, 1980, Seiten 111-122, München, DE; W. HAME et al.: "Inhärent sichere Luftkühlung bei der Lagerung selbsterhitzender Radionuklidkonfigurationen"**

(73) Patentinhaber: **Deutsche Gesellschaft für Wiederaufarbeitung von Kernbrennstoffen mbH, Hamburger Allee 4 Postfach 1407, D-3000 Hannover 1 (DE)**

(72) Erfinder: **Spilker, Harry, Talstrasse 3, D-3252 Bad Münder 2 (DE)**
Erfinder: **Rox, Rainer, Grethenweg 68, D-6000 Frankfurt/M. 70 (DE)**
Erfinder: **Peschl, Heinz- Walter, Die Ritterwiesen 8, D-6237 Liederbach (DE)**

(74) Vertreter: **König, Norbert, Dipl.- Phys. Dr., Patentanwälte Leine & König Burckhardtstrasse 1, D-3000 Hannover 1 (DE)**

**Beschreibung**

Die Erfindung betrifft ein Lager, insbesondere Trockenlager, für radioaktive Abfälle und abgebrannte Brennelemente gemäß Oberbegriff des Anspruchs 1.

Bei der Lagerung, insbesondere auch Zwischenlagerung von selbsterhitzendem radioaktivem Material muß für eine ausreichende Kühlung gesorgt werden, um zu vermeiden, daß infolge zu starker Erhitzung radioaktive Substanzen freigesetzt werden.

Es sind Lager zur Trockenlagerung selbsterwärmender radioaktiver Materialien bekannt, bei denen das Lagergut in Büchsen gepackt und die Büchsen in senkrechte Rohrschächte, deren Boden aus einem Gitterrost besteht, eines Lagergestelles eingesetzt werden. Das Lagergestell besteht aus Stahl und befindet sich in einer abgeschirmten Lagerzelle. Das Lager weist mehrere Lagerzellen auf. Die Kühlung der durch Nachwärme erwärmten Büchsen erfolgt durch natürliche Konvektion. Hierzu ist zwischen Büchse und Lagerschacht ein Ringspalt belassen. Die Außenluft als Kühlluft gelangt über eine Zuluftöffnung unter das Lagergestell, erwärmt sich beim Durchströmen des Ringspaltes und strömt über eine Abluftöffnung an die Umgebung zurück. Der unterhalb des Lagergestelles vorhandene Raum dient als Zuluftkessel zur Beruhigung und gleichmäßigen Verteilung der Kühlluft auf die Lagerschächte. Der oberhalb des Lagergestelles vorhandene Raum dient als Abluftkessel. Die Kühlluft wird aus der Außenluft über Zuluftöffnungen und Zuluftschächte zugeführt. Die Zuluftöffnungen liegen über der Geländeoberfläche und führen schräg nach oben gerichtet in die Zuluftschächte. Die Zuluftöffnungen und auch die Abluftöffnungen sind so ausgeführt und ausgestattet, daß ein Eindringen von Regen, Staub usw. verhindert wird. Bei diesem bekannten Lager sind nachteilig der relativ große bauliche Aufwand und die damit verbundenen hohen Kosten.

Es ist auch schon bekannt, anstelle der Lagergestelle und Schächte aus Stahl monolithische Betonblöcke mit eingegossenen senkrechten Kanälen einzusetzen, die der Aufnahme des radioaktiven Materials dienen. Aufgrund der auftretenden Temperaturunterschiede und Temperaturschwankungen besteht die Gefahr einer Beschädigung des Betonblockes, da eine Kompensation von thermischen Spannungen nicht erfolgt. Die Herstellung des bekannten Lagers ist relativ aufwendig. Eine Demontage ist nur unter großem Aufwand möglich.

Die Aufgabe der vorliegenden Erfindung besteht darin, ein gegenüber dem Stand der Technik verbessertes und sichereres Lager aus Beton anzugeben.

Diese Aufgabe wird durch die im Kennzeichen des Anspruchs 1 angegebene Ausbildung gelöst.

Die erfindungsgemäße Ausbildung sieht praktisch einen Aufbau nach dem Baukastenprinzip vor. Die einzelnen kleineren Betonquadereinheiten sind einfach und preiswert herstellbar. Sie sind leicht montierbar zur Herstellung der Lagerblöcke und auch entsprechend leicht wieder demontierbar. Der Lagerblock kann segmentweise aufgebaut werden. Durch die erfindungsgemäße Ausbildung wird eine verbesserte, wirkungsvollere Naturkühlung des in den Kanälen gelagerten Lagergutes erreicht. Die Kühlluft strömt in den Kanälen der Betonquader wie in einem Kamin empor. Ein Gebläse ist nicht notwendig. Der vorhandene Naturzug reicht aus, wodurch ein inhärent sicheres Kühlsystem geschaffen wird. Der Aufbau aus einzelnen zusammensetzbaren sorgt dafür, daß schädliche thermische Spannungen im Gesamtlagerblock nicht auftreten können. Das erfindungsgemäße Lager ist damit auch aus dieser Sicht inhärent sicher.

Aus der EP-A-0 047 875 ist an sich ein Zwischenlager für radioaktives Material bekannt, das leicht aufgebaut, umgebaut, erweitert und abgebaut werden kann. Es besteht aus einzelnen der Behälter umschließenden Lagerelementen, die aus im Querschnitt runden oder eckigen, übereinander gesetzten Rohrabschnitten und einem Deckel zusammengesetzt sind. Vorzugsweise sind die Rohrabschnitte als Betonrohre ausgebildet.

Vorteilhafte und zweckmäßige Weiterbildungen der erfindungsgemäßen Aufgabenlösung sind in den abhängigen Ansprüchen gekennzeichnet.

In den Ansprüchen 2 und 7 sind einfache Maßnahmen zur Zufuhr der Kühlluft angegeben.

Durch die Weiterbildung gemäß Anspruch 3 wird eine einfache Möglichkeit geschaffen, das Lagergut in den senkrechten Kanälen zu lagern.

Durch die Ausbildung gemäß Anspruch 4 wird eine besonders gute Kühlung der Lagerbehälter erzielt. Die Kühlluft strömt im Ringspalt wie in einem Kamin empor, umströmt dabei die Lagerbehälter und führt die Wärme ab.

Die metallenen Lagerbehälter bewirken zugleich eine Trennung zwischen dem radioaktiven Lagergut und der Kühlluft.

Durch die Weiterbildung gemäß Anspruch 5 wird die Wärmeabfuhr verbessert und durch die Ausbildung gemäß Anspruch 6 eine Erhöhung der Erdbebensicherheit erzielt.

Durch die weitere Ausgestaltung gemäß Anspruch 9 wird verhindert, daß Staub, Mikroorganismen usw. in das Lager gelangen und aus dem Lager heraus an die Atmosphäre abgeführt werden.

Die Weiterbildung gemäß Anspruch 10 erleichtert das Stapeln und Ausrichten der Betonquader.

Durch die weitere Ausgestaltung gemäß Anspruch 12 gestaltet sich das Beschicken der Lager- und Kühlkanäle besonders einfach.

Durch die weiteren Ausgestaltungen nach den Ansprüchen 13 bis 16 werden vorteilhafte Maßnahmen zum Lagern des Lagerbehälters in den Kanälen angegeben. Die Lagerbehälter werden sozusagen mit Hilfe von Stützarmen in die Kanäle der Betonquader bzw. der Lagerblöcke eingehängt. Dies hat den Vorteil, daß sich der unterhalb der Stützarme befindliche längere Teil der Lagerrohre infolge Erwärmung axial nach unten frei und ungehindert ausdehnen kann, ohne daß schädliche Kräfte auf irgendwelche Bauteile ausgeübt werden.

Das obere kürzere Teil der Lagerbehälter oberhalb der Stützarme wird entsprechend weniger durch Wärme ausgedehnt. Um einer solchen geringen Ausdehnung Rechnung zu tragen, sind die Ausbildungen nach den Ansprüchen 24 und 25 vorgesehen. Die zur Abdichtung des oberen Teiles des Lager- und Kühlkanales bzw. der Öffnung in der Betondecke gegenüber der Umgebung vorgesehene Dichtungsmanschette kann diesen Wärmebewegungen des Lagerbehälters folgen.

Zweckmäßige und vorteilhafte Ausbildungen zur Abdichtung und Abschirmung des oberen Teiles des Lagerbehälters sind in den Ansprüchen 17 bis 21 angegeben. Zweckmäßige Abdichtungen des oberen Teiles des Lagerbehälters sowie der Öffnung bzw. der Erweiterung dieser Öffnung sind in den Ansprüchen 22 und 23 angegeben.

Um einen optimalen Schutz gegen eindringendes Wasser, insbesondere Grundwasser, in das Lager zu gewährleisten, sind die weiteren Ausgestaltungen nach den Ansprüchen 28 und 29 vorgesehen. Hierdurch wird verhindert, daß Wasser in den Raum unterhalb der Lagerblöcke und in die Lager- und Kühlkanäle eindringen und die Naturzugkühlung beeinträchtigen oder unterbrechen kann.

Weitere zweckmäßige Ausgestaltungen sind in den Ansprüchen 27 und 28 angegeben.

Durch die Weiterbildung gemäß Anspruch 29 wird erreicht, daß die zuströmende Luft beruhigt und gleichmäßig auf die Kanäle bzw. Ringspalte verteilt wird und daß die Abluft ungehindert abströmen kann.

Im Anspruch 30 ist eine einfache Maßnahme zur Festlegung des Ringspaltes angegeben, ohne daß zusätzliche Abstandshalter vorgesehen werden müssen.

Die Erfindung soll nachfolgend anhand der beigefügten Zeichnung näher erläutert werden. Es zeigt

Fig. 1  schematisch einen Teil eines erfindungsgemäßen Lagers in perspektivischer teilweise weggebrochener Darstellung,

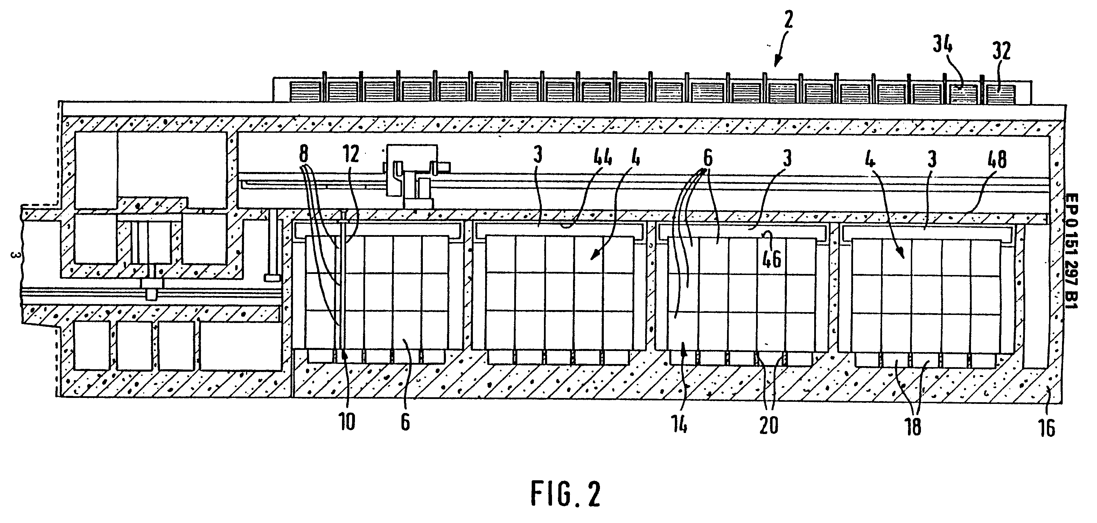

Fig. 2  einen Längsschnitt durch das Lager nach Fig. 1,

Fig. 3  einen Querschnitt durch das Lager nach Fig. 1,

Fig. 4  eine detaillierte Darstellung eines Teils des erfindungsgemäß ausgebildeten Lagers und

Fig. 5  einen Schnitt V - V durch einen in der Fig. 4 dargestellten Lagerbehälter.

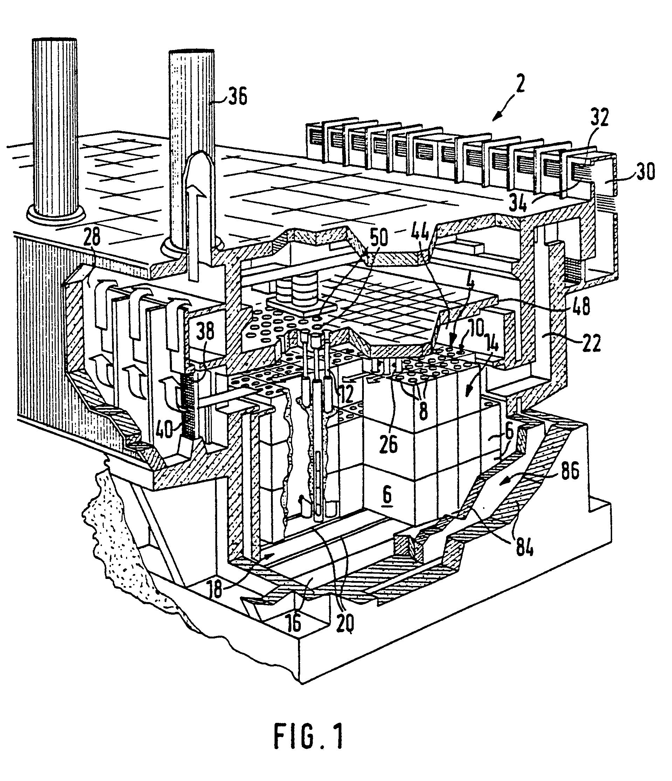

Die Zeichnung zeigt ein Lager 2 zur Lagerung (Trockenlagerung) insbesondere Zwischenlagerung, von selbsterhitzenden radioaktiven Abfällen und abgebrannten Brennelementen. Im eigentlichen Lagerbereich befinden sich in Lagerzellen 3 Lagerblöcke 4 aus Beton, die aus einzelnen Betonquadern 6 zusammengesetzt sind, in denen mehrere senkrechte Kanäle 8 (gemäß Fig. 1 vier Kanäle) ausgebildet sind. Die Betonquader sind nun so übereinander stapelbar, daß die Kanäle miteinander fluchten und Kühl- und Lagerkanäle 10 zur Aufnahme von rohrförmigen Lagerbehältern 12 aus Metall zum Lagern von Nachzerfallswärme erzeugendem radioaktivem Material bilden.

Mehrere übereinander gestapelte Betonquader 6 bilden ein Blocksegment 14. Mehrere Blocksegmente 14 bilden einen Lagerblock 4.

Der Lagerblock 4 steht auf einer Betonbodenplatte 16, die längsverlaufende Kühlluftkanäle 18 aufweist, die hier zwischen auf der Bodenplatte 16 ausgebildeten niedrigen Wänden 20 gebildet sind. Die Kühlluftkanäle 18 stehen mit Zuluftkanälen 22 in Verbindung.

Zwischen den Lagerbehältern 12 und der Innenwand der Kanäle 10 ist ein Ringspalt 26 vorhanden, der mit den Kühlluftkanälen 18 in Verbindung steht.

Am oberen Ende münden die Kühl- und Lagerkanäle 10 in einen Abluftkanal 28, über den die im Lager 2 erwärmte Kühlluft abgeführt wird.

Die Kühlluft wird über Schächte 30 zugeführt, deren Eintrittsöffnungen 32 mit Filtern 34 zum Zurückhalten von Staub, Mikroorganismen usw. versehen sind.

Die erwärmte Luft wird über Schächte oder Schornsteine 36 abgeführt, wobei die Austrittsöffnungen 38 ebenfalls mit Filtern 40 ausgestattet sind.

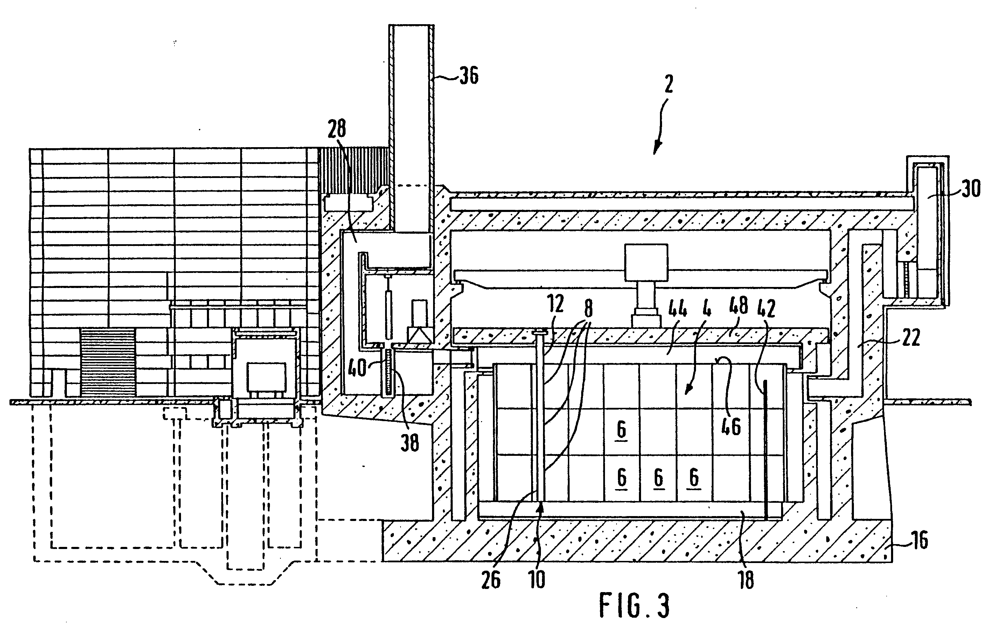

Die einzelnen Blocksegmente 14 können, wie schematisch in der Fig. 3 dargestellt ist, mit Hilfe von Spannelementen 42 mit der Bodenplatte 16 verspannt sein zur Verbesserung der Erdbebensicherheit.

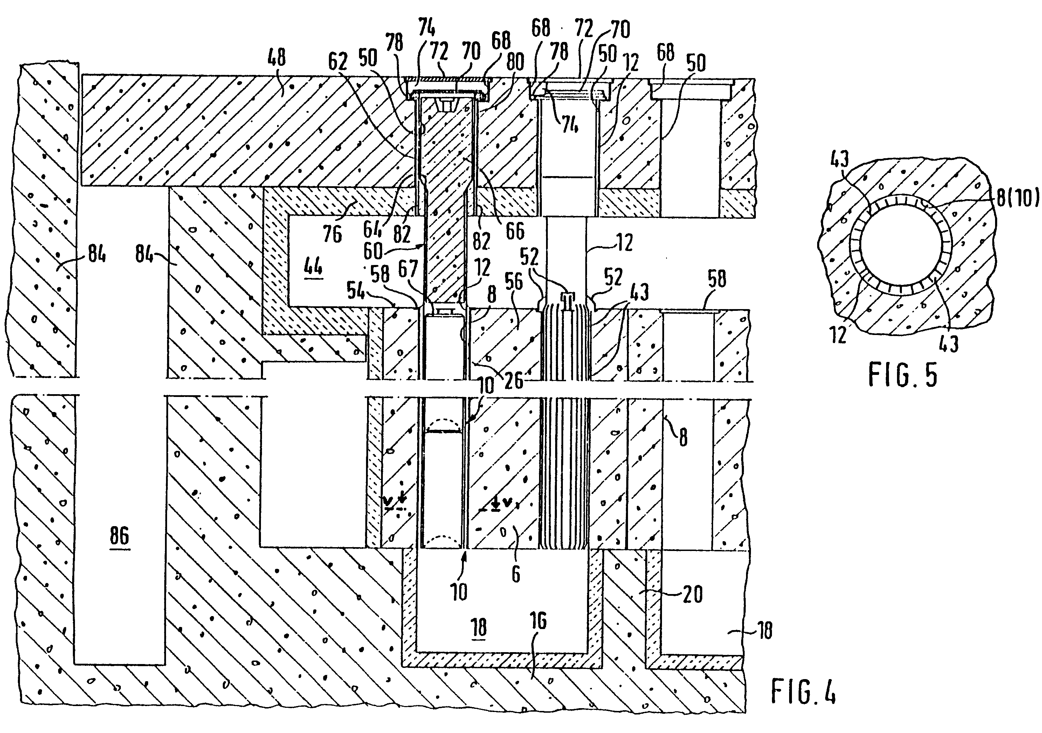

Die Außenfläche der rohrförmigen Lagerbehälter 12 kann zusätzlich mit Längsrippen 43 (Fig. 4 und 5) als Kühlrippen versehen sein zur Verbesserung der Wärmeabfuhr. Diese Kühlrippen 43 sind vorzugsweise so ausgebildet, daß sie gleichzeitig als Abstandshalter zur Festlegung des Ringspaltes 26 dienen. Durch diese Ausbildung kann auf zusätzliche Abstandshalter verzichtet werden.

Die Kühlung erfolgt durch die durch natürliche Konvektion hervorgerufene Luftströmung. Im Ringspalt 26 erwärmt sich die Luft und steigt wie in einem Kamin auf. Die kältere Außenluft strömt als Kühlluft über die Schächte 30 nach.

Der eigentliche Lagerbereich des Lagers 2 ist durch eine Betondecke 48 nach oben abgeschlossen. Zwischen der Oberseite 46 der Lagerblöcke 4 und der Unterseite der Betondecke 48 ist ein Zwischenraum 44 belassen, der gleichzeitig einen ersten etwa horizontal verlaufenden Abschnitt der Abluftkanäle 28 bildet.

In der Betondecke 48 sind Öffnungen 50 ausgebildet, die mit den Lager- und Kühlkanälen 10 der Lagerblöcke 4 ausgerichtet sind. Durch diese Öffnungen sind die rohrförmigen Lagerbehälter 12 in die Kanäle einführbar und aus diesen wieder herausziehbar.

Der Raum zwischen der Unterseite der Betonblöcke 4 und der Bodenplatte bzw. die Größe der Kühlluftkanäle 18 ist so groß bemessen, daß dieser Raum bzw. die Kühlluftkanäle einen Zuluftverteilungsraum bilden, durch den die zuströmende Kühlluft beruhigt und gleichmäßig auf die Ringspalte verteilt wird. Gleichermaßen ist der Zwischenraum zwischen der Oberseite der Lagerblöcke 4 und der Unterseite der Betondecke so groß bemessen, daß dieser als Abluftsammelraum ausgebildet ist zur gleichmäßigeren Abführung der erwärmten Kühlluft.

Die rohrförmigen Lagerbehälter 12 sind auf ihrer Außenseite mit mehreren Stützarmen 52 versehen, die auf dem Umfang verteilt angeordnet sind, vgl. Fig. 4, die einen Lagerbehälter mit vier gleichmäßig verteilten Stützarmen aufweist. Mit diesen Stützarmen stützen sich die Lagerbehälter auf den Oberseiten 54 der obersten Betonquader 56 ab. Vorzugsweise stützen sie sich in auf der Oberseite 54 ausgebildeten Ausnehmungen 58 ab, die beim dargestellten Ausführungsbeispiel als ringstufenförmige Erweiterungen des oberen Endes des Kanales 8 ausgebildet sind. Die Ausnehmungen können natürlich auch diskret, beispielsweise als um das Kanalende verteilte Einzelstufen entsprechend der Anordnung der Stützarme ausgebildet sein.

Das obere Teil 60 des Lagerbehälters weist eine in der Einbaulage des Lagerbehälters etwa im Bereich der Betondecke 48 angeordnete Erweiterung 62 auf, so daß eine Ringschulter oder eine ringförmige Übergangsfläche 64 zwischen Rohrerweiterung 62 und dem darunter befindlichen Teil des Lagerbehälters gebildet wird.

In den oberen Teil 60 des Lagerbehälters 12 ist ein Betonstopfen 66 eingesetzt, der bis kurz vor das Lagergut hinunterragt, das in der Fig. 4 beispielsweise aus mehreren übereinander gestapelten Glaskokillen 67 besteht. Die Form des Stopfens 66 entspricht der Form des oberen Teils 60 des Lagerbehälters, so daß der Stopfen auf der Ringschulter 64 aufliegt.

Das obere, den Stopfen 66 ein wenig überragende Ende des Lagerbehälters 12 ragt in eine zylindrische Erweiterung 68 der Öffnung 50 und ist mit Hilfe eines Deckels 70 verschlossen.

Die Erweiterung 68 bzw. die Öffnung 50 ist mit einem Deckel 72 versehen, der beabstandet zum Deckel 70 angeordnet ist.

In der zylindrischen Erweiterung 68 befindet sich außerdem eine Dichtmanschette 74 zum Abdichten der Öffnung bzw. des Ringspaltes 26, 80 oder Kanales 10 gegen die Umgebung. Die Dichtmanschette 74 ist einerseits zwischen Lagerbehälterdeckel 70 und Lagerbehälter 12 und andererseits zwischen Öffnungsdeckel 72 und Wand der Erweiterung 68 eingespannt. Die Dichtmanschette erlaubt eine Auf- und Abbewegung des oberhalb der Stützarme befindlichen Lagerbehälterteiles 60 aufgrund von Wärmedehnungen, ohne daß Abdichtprobleme entstehen.

Die Lagerzellen 3 sind innen mit einer Isolierung 76 ausgekleidet. Die Größe der Räume 78 unterhalb der Dichtmanschetten 74 ändert sich durch Wärmeausdehnung des Lagerbehälters und damit durch Lageänderung der Dichtmanschette.

Das Lager 2 weist eine zweischalige Außenwand 84 auf. Der Zwischenraum 86 zwischen beiden Wänden, die aus Beton bestehen, wird hinsichtlich des Eindringens von Wasser, beispielsweise von Grundwasser, überwacht. Eingedrungenes Wasser wird ggf. mit Hilfe von Pumpen abgesaugt.

## Patentansprüche

1. Lager für radioaktive Abfälle und abgebrannte Brennelemente mit einem Betonlagerblock, in den mehrere senkrechte Lager- und Kühlkanäle zur Aufnahme des radioaktiven Abfalls und der Brennelemente ausgebildet sind, dadurch gekennzeichnet, daß der Lagerblock (4) aus mehreren neben- und übereinander angeordneten Betonquadern (6) zusammengefügt ist, in denen jeweils mehrere im gleichen Raster angeordnete und mit gleichen Abmessungen versehene senkrechte Kanäle (8) ausgebildet sind.

2. Lager nach Anspruch 1, dadurch gekennzeichnet, daß der aus den Betonquadern (6) aufgebaute Lagerblock (4) beabstandet zu einer Betonbodenplatte (16) angeordnet ist und daß der Raum zwischen den Betonquadern und der Bodenplatte als Zuluftraum ausgebildet ist.

3. Lager nach Anspruch 1, dadurch gekennzeichnet, daß in den aus den miteinander fluchtenden Kanälen (8) der jeweils übereinander angeordneten Betonquadern (6) gebildeten Lager- und Kühlkanälen (10) rohrförmige, sich wenigstens über die gesamte Länge der Lager- und Kühlkanäle (10) erstreckende Lagerbehälter (12) für die radioaktiven Abfälle und abgebrannten Brennelemente angeordnet sind.

4. Lager nach Anspruch 3, dadurch gekennzeichnet, daß zwischen der Außenwand des Lagerbehälters (12) und der Innenwand des Lager- und Kühlkanales (10) ein Ringspalt (26) für Kühlluft belassen ist.

5. Lager nach Anspruch 3 oder 4, dadurch gekennzeichnet, daß die rohrförmigen Lagerbehälter (12) auf der Außenseite mit in axialer Richtung verlaufenden Kühlrippen (43) ausgestattet sind.

6. Lager nach Anspruch 2 oder 3, dadurch gekennzeichnet, daß die übereinander angeordneten einzelnen Betonquader (6) jeweils ein Lagerblocksegment (14) bilden, das mit der Bodenplatte (16) mit Hilfe von Spannelementen (42) verspannt ist.

7. Lager nach Anspruch 1 oder 6, dadurch gekennzeichnet, daß in oder auf der Bodenplatte (16) nach oben offene Kühlluftkanäle (18) ausgebildet sind, die mit den senkrechten Kanälen (8, 10) des Lagerblockes (4) bzw. mit den Ringspalten (26) zwischen den Kanalwänden und den rohrförmigen Lagerbehältern in Verbindung stehen.

8. Lager nach Anspruch 7, dadurch gekennzeichnet, daß die unteren Enden der Kanäle (8, 10) des Lagerblockes (4) bzw. der Ringspalte (26) über die Kühlluftkanäle (18) der Bodenplatte (16) mit Kühlluftzufuhrkanälen (22) in Verbindung stehen, und daß die oberen Enden der Kanäle (8, 10) des Lagerblockes in Abluftkanäle (28) münden.

9. Lager nach Anspruch 8, dadurch gekennzeichnet, daß die Lufteintrittsöffnung (32) der Zufuhrkanäle (22) und die Luftaustrittsöffnung (38) der Abluftkanäle (28) mit Filtern (34 bzw. 40) versehen sind.

10. Lager nach einem der vorhergehenden Ansprüche, dadurch gekennzeichnet, daß die einzelnen Betonquader auf ihren oberen und unteren Stapelflächen zueinander komplementär ausgebildete, ineinanderfügbare Zentrierelemente aufweisen.

11. Lager nach Anspruch 8 oder 9, dadurch gekennzeichnet, daß die Abluftkanäle (28) einen ersten etwa horizontal verlaufenden Abschnitt (44) aufweisen, der durch einen Zwischenraum zwischen der Oberseite (46) der Lagerblöcke und einer Betondecke (48) gebildet wird.

12. Lager nach Anspruch 11 und einem der vorhergehenden Ansprüche, dadurch gekennzeichnet, daß in der Betondecke (48) Öffnungen (50) ausgebildet sind, die mit den Lager- und Kühlkanälen (10) der Lagerblöcke (4) ausgerichtet sind und durch die die rohrförmigen Lagerbehälter (12) in die Kanäle (10) einführbar und herausnehmbar sind.

13. Lager nach einem der vorhergehenden Ansprüche, dadurch gekennzeichnet, daß die rohrförmigen Lagerbehälter (12) mehrere, vom Mantel abstehende, umfangsmäßig angeordnete Stützarme (52) aufweisen, die sich auf der Oberseite (54) der obersten Betonquader (56) des Lagerblockes (4) abstützen.

14. Lager nach Anspruch 13, dadurch gekennzeichnet, daß die freien Enden der Stützarme (52) in auf der Oberfläche (54) der Betonquader (56) ausgebildeten Ausnehmungen (58) angeordnet sind.

15. Lager nach Anspruch 13, dadurch gekennzeichnet, daß die freien Enden der Stützarme (52) in ringförmigen, auf der Oberfläche (54) der Betonquader (56) ausgebildeten Ausnehmungen (58) angeordnet sind.

16. Lager nach Anspruch 14 oder 15, dadurch gekennzeichnet, daß die Ausnehmungen (58) durch stufenförmige Erweiterungen oder durch eine ringstufenförmige Erweiterung des oberen Endes der Kanäle (8) gebildet werden.

17. Lager nach einem der vorhergehenden Ansprüche, dadurch gekennzeichnet, daß der rohrförmige Lagerbehälter (12) in seinem oberen Bereich (60) eine Erweiterung (62) aufweist, so daß eine Ringschulter oder ringförmige Obergangsfläche (64) gebildet wird.

18. Lager nach Anspruch 17, dadurch gekennzeichnet, daß die Erweiterung (62) des Lagerbehälters (12) in der Öffnung (50) der Betondecke (48) angeordnet ist.

19. Lager nach Anspruch 17 oder 18, dadurch gekennzeichnet, daß in dem oberhalb des Lagerblockes (4) befindlichen Teil (60) des Lagerbehälters (12), wenigstens jedoch in der rohrförmigen Erweiterung (62) ein Abschirmstopfen (66) angeordnet ist, dessen Außenform der Innenform der Erweiterung bzw. des oberen Behälterteiles (60) entspricht.

20. Lager nach Anspruch 19, dadurch gekennzeichnet, daß der Abschirmstopfen (66) aus Beton besteht.

21. Lager nach einem der vorhergehenden Ansprüche, dadurch gekennzeichnet, daß die Öffnung (50) am oberen Ende eine Erweiterung (68) aufweist.

22. Lager nach Anspruch 21, dadurch gekennzeichnet, daß das obere, den Stopfen (66) überragende Ende des Lagerbehälters (12) mit Hilfe eines Deckels (70) abgedichtet ist.

23. Lager nach Anspruch 21 oder 22, dadurch gekennzeichnet, daß die Öffnung (50) bzw. die Erweiterung (68) mit einem Deckel oder Stopfen (72) versehen ist, der beabstandet zum oberen Ende des Lagerrohres oder des Deckels des Lagerrohres angeordnet ist.

24. Lager nach Anspruch 21 oder 23, dadurch gekennzeichnet, daß die Öffnung (50) bzw. der Lager- und Kühlkanal (10) bzw. der Ringspalt (80) mit Hilfe einer Dichtmanschette (74) gegenüber der Umgebung abgedichtet ist.

25. Lager nach Anspruch 24, dadurch gekennzeichnet, daß die Dichtmanschette (74) in der Erweiterung (68) angeordnet ist und einerseits zwischen Behälterdeckel (70) und Lagerbehälter (12) und andererseits zwischen Öffnungsdeckel (72) und Wand der Erweiterung (68) eingespannt ist.

26. Lager nach einem der vorhergehenden Ansprüche, dadurch gekennzeichnet, daß die Wände, der Boden und die Decke der Lagerzellen (3), in denen sich die Lagerblöcke befinden, mit einer Isolierung (76) versehen sind.

27. Lager nach einem der vorhergehenden Ansprüche, dadurch gekennzeichnet, daß die Lageraußenwand (84) zweischalig ausgebildet ist.

28. Lager nach Anspruch 27, dadurch gekennzeichnet, daß der Zwischenraum (86) zwischen den beiden beabstandeten, aus Beton bestehenden Wänden der Lageraußenwand mit einer Einrichtung zur Überwachung von eventuell eindringendem Wasser und zum Abpumpen eingedrungenen Wassers ausgestattet ist.

29. Lager nach einem der Ansprüche 2, 7, 8 und 11, dadurch gekennzeichnet, daß die Kühlluftkanäle (18) bzw. der Zwischenraum zwischen den Betonquadern (6) und der Bodenplatte (16) und /oder die Abschnitte (44) der Abluftkanäle (28) so groß dimensioniert sind, daß sie Zuluftverteilungsräume bzw. Abluftsammelräume bilden.

30. Lager nach Anspruch 5, dadurch gekennzeichnet, daß die Kühlrippen (43) gleichzeitig als Abstandshalter zur Festlegung der Ringspalte (26) ausgebildet sind.

## Claims

1. A store for radioactive waste and spent fuel elements, having a concrete storage block in which a number of vertical storage and cooling channels is formed for the reception of the radioactive waste and fuel elements, characterized in that the storage block (4) is joined together from a number of squared concrete units (6) arranged side by side and one above the other, in each of which a number of vertical channels (8) is formed, arranged on the same pattern and provided with the same dimensions.

2. A store as in Claim 1, characterized in that the storage block (4) built up from the squared concrete units (6) is arranged clear of a concrete bedplate (16) and that the space between the squared concrete units and the bedplate is made as an inlet air space.

3. A store as in Claim 1, characterized in that in the storage and cooling channels (10) formed by the channels (8) aligned with one another in the squared concrete units (6) where arranged one above the other, tubular storage containers (12) for the radioactive waste and spent fuel elements are arranged, extending at least over the whole length of the storage and cooling channels (10).

4. A store as in Claim 3, characterized in that between the outer wall of the storage container (12) and the inner wall of the storage and cooling channel (10) an annular gap (26) is left for cooling air.

5. A store as in Claim 3 or 4, characterized in that the tubular storage containers (12) are equipped on the outside with cooling fins (43) running in the axial direction.

6. A store as in Claim 2 or 3, characterized in that the individual squared concrete units (6) arranged one above the other form in each case a storage block segment (14) which is clamped to the bedplate (16) by means of clamping elements (42).

7. A store as in Claim 1 or 6, characterized in that in or on the bedplate (16) cooling air channels (18) open at the top are formed which are connected to the vertical channels (8, 10) in the storage block (4) or to the annular gaps (26) between the channel walls and the tubular storage containers.

8. A store as in Claim 7, characterized in that the bottom ends of the channels (8, 10) in the storage block (4) and of the annular gaps (26) are connected to cooling air feed channels (22) via the cooling air channels (18) in the bedplate (16) and that the top ends of the channels (8, 10) in the storage block open into exhaust air channels (28).

9. A store as in Claim 8, characterized in that the air inlet opening (32) to the feed channels (22) and the air outlet opening (38) from the exhaust air channels (28) are provided with filters (34 resp. 40).

10. A store as in one of the preceding Claims, characterized in that the individual squared concrete units exhibit on their top and bottom stacking faces centreing elements made complementary with one another and suitable for joining together.

11. A store as in Claim 8 or 9, characterized in that the exhaust air channels (28) exhibit a first portion (44) running approximately horizontal, which is formed by a gap between the upper face (46) of the storage blocks and a concrete cover (48).

12. A store as in Claim 11 and one of the preceding Claims, characterized in that in the concrete cover (48) openings (50) are made, which are aligned with the storage and cooling channels (10) in the storage blocks (4) and through which the tubular storage containers (12) may be introduced into and taken out of the channels (10).

13. A store as in one of the preceding Claims, characteried in that the tubular storage containers (12) exhibit a number of peripherally arranged brackets (52) standing out from the shell, which bear against the upper face (54) of the uppermost squared concrete units (56) of the storage block (4).

14. A store as in Claim 13, characterized in that the free ends of the brackets (52) are arranged in recesses (58) made in the surface (54) of the squared concrete units (56).

15. A store as in Claim 13, characterized in that the free ends of the brackets (52) are arranged in annular recesses (58) made in the surface (54) of the squared concrete units (56).

16. A store as in Claim 14 or 15, characterized in that the recesses (58) are formed at the top end of the respective channel (8) by widenings in the form of steps or by a widening in the form of an annular step.

17. A store as in one of the preceding Claims, characterized in that the tubular storage container (12) exhibits in the upper region (60) of it a widening (62) is that an annular shoulder or transitional area (64) is formed.

18. A store as in Claim 17, characterized in that the widening (62) of the storage container (12) is arranged in the opening (50) in the concrete cover (48).

19. A store as in Claim 17 or 18, characterized in that in the part (60) of the storage container (12) lying above the storage block (4) but at least in the tubular widening (62) a screening plug (66) is arranged, the outer shape of which corresponds with the inner shape of the widening or of the upper part (60) of the container.

20. A store as in Claim 19, characterized in that the screening plug (66) consists of concrete.

21. A store as in one of the preceding Claims, characterized in that the opening (50) exhibits at the top end a widening (68).

22. A store as in Claim 21, characterized in that the top end of the storage container (12) projecting beyond the plug (66) is sealed by means of a lid (70).

23. A store as in Claim 21 or 22, characterized in that the opening (50) or respectively the widening (68) is provided with a lid or plug (72) which is arranged at a distance from the top end of the storage tube or of the lid of the storage tube.

24. A store as in Claim 21 or 23, characterized in that the opening (50) or respectively the storage and cooling channel (10) or respectively the annular gap (80) is sealed from the surroundings by means of a sealing packing (74).

25. A store as in Claim 24, characterized in that the sealing packing (74) is arranged in the widening (68) and is clamped at one side between the container lid (70) and the storage container (12) and on the other side between the lid (72) of the opening and the wall of the widening (68).

26. A store as in one of the preceding Claims, characterized in that the walls, the bottom and the cover of the storage cells (3) in which the storage blocks lie are provided with insulation (76).

27. A store as in one of the preceding Claims. characterized in that the outer wall (84) of the store is made with a double shell.

28. A store as in Claim 27, characterized in that the gap (86) between the two spaced walls of the outer wall of the store, which consist of concrete, is equipped with a device for monitoring the possible penetration of water and for pumping away water which has penetrated.

29. A store as in one of the Claims 2, 7, 9 and 11, characterized in that the cooling air channels (18) or respectivel the gap between the squared concrete units (6) and the bedplate (16) and/or the portions (44) of the exhaust air channels (28) are dimensioned to be large enough to form inlet air distribution chambers and exhaust air collecting chambers.

30. A store as in Claim 5, characterized in that cooling fins (43) are made at the same time as spreaders for establishing the annular gaps (26).

**Revendications**

1. Magasin pour déchets radioactifs et éléments combustibles usés avec un bloc de magasin en béton, dans lequel sont formés plusieurs canaux verticaux de magasin et de refroidissement pour recevoir le déchet radioactif et les éléments combustibles, caractérisé en ce que le bloc de magasin (4) est assemblé en plusieurs parallélépipèdes de béton (6) disposés côte à côte et les uns sur les autres, dans lesquels sont formés plusieurs canaux verticaux (8) respectivement disposés selon des quadrillages identiques et ayant les mêmes dimensions.

2. Magasin selon la revendication 1, caractérisé en ce que le bloc de magasin (4) construit en parallélépidèdes de béton (6) est disposé écarté d'une plaque de sol en béton (16), et que l'espace entre les parallélépipèdes de béton et la plaque de sol est construit sous forme d'espace d'amenée d'air.

3. Magasin selon la revendication 1, caractérisé en ce que des récipients de stockage (12) tubulaires pour les déchets radioactifs et les éléments combustibles usés, s'étendant au moins sur toutes les longueurs des canaux de stockage et de refroidissement (10) sont disposés dans les canaux de stockage et de refroidissement (10) formés par les canaux (8) alignés des parallélépipèdes de béton (6) disposés respectivement les uns sur les autres.

4. Magasin selon la revendication 3, caractérisé en ce qu'une fente annulaire (26) pour l'air de refroidissement est ménagée entre la paroi extérieure du récipient de stockage (12) et la paroi intérieure du canal de stockage et de refroidissement (10).

5. Magasin selon la revendication 3 ou 4, caractérisé en ce que les récipients de stockage (12) sont munis sur la face extérieure de nervures de refroidissment (43) s'étendant en direction axiale.

6. Magasin selon la revendication 2 ou 3, caractérisé en ce que les parallélépipèdes de béton (6) individuels disposés les uns au-dessus des autres forment respectivement un segment de bloc de magasin (14) qui est croisillonné l'aide d'éléments de tension (42).

7. Magasin selon la revendication 1 ou 6, caractérisé en ce que des canaux d'air de refroidissement (18) ouverts vers le haut sont formés ou sur la plaque de sol (16), qui sont en liaison avec les canaux verticaux (8, 10) du bloc de magasin (4) ou avec les fentes annulaires (26) entre les parois de canal et les récipients de stockage tubulaires.

8. Magasin selon la revendication 7, caractérisé en ce que les extrémités inférieures des canaux (8, 10) du bloc de magasin (4) ou de la fente annulaire (26) sont en liaison, par les canaux d'air de refroidissement (18) de la plaque de sol, avec des canaux d'amenée d'air de refroidissement (22), et que les extrémités supérieures des canaux (8, 10) du bloc de magasin débouchent dans des canaux d'évacuation d'air (28).

9. Magasin selon la revendication 7, caractérisé en ce que l'ouverture d'entrée d'air (32) des canaux d'amenée (22) et l'ouverture de sortie d'air (38) des canaux d'évacuation d'air (28) sont munis de filtres (34 ou 40).

10. Magasin selon l'une des revendications précédentes, caractérisé en ce que les parallélépipèdes de béton individuels présentent sur leurs surfaces d'empilement supérieures et inférieures des éléments de centrage formés complémentaires les uns des autres et pouvant être adaptés les uns dans les autres.

11. Magasin selon la revendication 8 ou 9, caractérisé en ce que les canaux d'évacuation d'air (28) présentent une première section (44) s'étendant sensiblement horizontalement, qui est formée par un espace intermédiaire entre la face supérieure (46) des blocs de magasin et une couverture en béton (48).

12. Magasin selon la revendication 11 et l'une des revendications précédentes,

caractérisé en ce que des ouvertures (50) sont formées dans la couverture en béton (48) qui sont alignées avec les canaux de stockage et de refroidissement (10) des blocs de magasin (4) et par lesquelles les récipients de stockage (12) tubulaires peuvent être introduits dans les canaux (10) et en être extraits.

13. Magasin selon l'une des revendications précédentes,

caractérisé en ce que les récipients de stockage (12) tubulaires présentent plusieurs bras d'appui (52) écartés de la surface latérale et disposés selon la périphérie, qui s'appuient sur la face supérieure (54) des parallélépipèdes de béton (56) les plus au-dessus du bloc de magasin (46).

14. Magasin selon la revendication 13,

caractérisé en ce que les extrémités libres des bras d'appui (52) sont disposés dans des évidements (58) formés sur la surface (54) des parallélépipèdes de béton (56).

15. Magasin selon la revendication 13,

caractérisé en ce que les extrémités libres des bras d'appui (52) sont disposés dans des évidements annulaires (58) formés sur la surface (54) des parallélépipèdes de béton (56).

16. Magasin selon la revendication 14 ou 15,

caractérisé en ce que les évidements (58) sont formés par des élargissements étagés ou par un élargissement annulaire étagé de l'extrémité supérieure des canaux (8).

17. Magasin selon l'une des revendications précédentes,

caractérisé en ce que le récipient de stockage (12) tubulaire présente dans sa zone supérieure (60) un élargissement (60) de telle manière qu'un épaulement annulaire ou une surface de transition (64) annulaire est formé.

18. Magasin selon la revendication 17,

caractérisé en ce que l'élargissement (62) du récipient de stockage (12) est disposé dans l'ouverture (50) de la couverture en béton (48).

19. Magasin selon la revendication 17 ou 18,

caractérisé en ce qu'un bouchon de blindage (66) est disposé dans la partie (60) du récipient de stockage (12) se trouvant au-dessus du bloc de magasin (4), au moins cependant dans l'élargissement tubulaire (62), dont la forme extérieure correspond à la forme intérieure de l'élargissement ou de la partie supérieure (60) du récipient.

20. Magasin selon la revendication 19,

caractérisé en ce que le bouchon de blindage (66) est constitué de béton.

21. Magasin selon l'une des revendications précédentes,

caractérisé en ce que l'ouverture (50) présente un élargissement (68) au bord supérieur.

22. Magasin selon la revendication 21,

caractérisé en ce que l'extrémité supérieure du récipient de stockage (12) faisant saillie au-dessus du bouchon (66) est rendue étanche à l'aide d'un couvercle (70).

23. Magasin selon la revendication 21 ou 22,

caractérisé en ce que l'ouverture (50) ou l'élargissement (68) est muni d'un couvercle ou bouchon (72) qui est disposé écarté de l'extrémité supérieure du tube de stockage ou du couvercle du tube de stockage.

24. Magasin selon la revendication 21 ou 23,

caractérisé en ce que l'ouverture (50) ou le canal de stockage et de refroidissement (10) ou la fente annulaire (80) est rendu étanche vis-à-vis de l'environnement à l'aide d'une manchette d'étanchéité (74).

25. Magasin selon la revendication 24,

caractérisé en ce que la manchette d'étanchéité (74) est disposée dans l'élargissement (68) et est encastrée d'un côté entre le couvercle de récipient (70) et le récipient de stockage (12) et de l'autre côté entre le couvercle d'ouverture (72) et la paroi de l'élargissement (68).

26. Magasin selon l'une des revendications précédentes,

caractérisé en ce que les parois, le sol et la couverture des cellules de magasin (3), dans lesquelles se trouvent les blocs de magasin, sont munis d'une isolation (76).

27. Magasin selon l'une des revendications précédentes,

caractérisé en ce que la paroi extérieure (84) du magasin est construite sous forme de deux coquilles.

28. Magasin selon la revendication 27,

caractérisé en ce que l'espace intermédiaire (86) entre les deux parois écartées, constituées de béton, de la paroi extérieure du magasin est muni d'un dispositif de surveillance de l'eau pénétrant éventuellement et d'évacuation par pompage de l'eau ayant pénétré.

29. Magasin selon l'une des revendications 2, 7, 8 et 11,

caractérisé en ce que les canaux d'air de refroidissement (18) ou l'espace intermédiaire entre les parallélépipèdes de béton (6) et la plaque de sol (16) et/ou les sections (44) des canaux d'évacuation d'air (28) ont une dimension telle qu'ils forment des volumes de répartition d'amenée d'air ou des volumes collecteurs d'évacuation d'air.

30. Magasin selon la revendication 5,

caractérisé en ce que les nervures de refroidissement (43) sont conformées en même temps comme supports d'écartement pour la fixation de la fente annulaire (26).

FIG. 1

FIG. 2

EP 0 151 297 B1

FIG.3

FIG. 4

FIG. 5

EP 0 151 297 B1